# EUROPEAN PATENT SPECIFICATION

(11) **EP 0 278 923 B1**
(45) Date of publication and mention of the grant of the patent: **10.11.1993**
(21) Application number: 88830046.4
(22) Date of filing: 08.02.1988
(51) Int. Cl.: H02G 3/04

(54) **Modular element system for making raceways for housing electrical cables and the like**
Baukastensystem zur Herstellung von Leitungen zur Aufnahme von elektrischen Kabeln und dergleichen
Système à éléments modulaires pour construire des canalisations pour contenir des câbles électriques et objets similaires

(30) Priority: 06.02.1987 IT 1929387
(43) Date of publication of application: 17.08.1988
(73) Proprietor: CANALPLAST S.r.l., I-20051 Limbiate (Milano) (IT)
(72) Inventor: Villi, Piergiorgio, I-20051 Limbiate (Milano) (IT)
(74) Representative: Cicogna, Franco

(56) References cited:
- DE-B- 2 136 752
- DE-U- 8 522 603
- GB-A- 1 436 380

## Description

The present invention relates to a modular element system for making raceways for housing electrical cables and the like.

As is known, for making electrical systems both for industrial and civil applications, there are presntly used raceways which generally consist of plastics material extruded pieces or sections, having a U-shaped cross-section thereto a closure cover member is generally associated.

These systems, on the other hand, are scarcely flexible, since comparatively complex means are to be used for affixing said plastics material extruded pieces to a wall or a ceiling.

More specifically, in order to affix said raceways there are presently used screw means which require a comparatively long assembling time and do not afford the possibility of easily and quickly removing the raceways as the arrangement whereof is to be changed.

Moreover, the mentioned known raceways do not afford the possibility of making very different installations, since these raceways may be mutually coupled exclusively according to standardized and fixed patterns.

Another drawback of known raceways is that they can be hardly mutually coupled.

The document DE-A-2 136 752 discloses a modular element system for making raceways for electrical cables and the like having substantially the features of the pre-characterizing part of the main claim
Thus, the task of the present invention is to overcome the above mentioned drawbacks, by providing a modular element system for making raceways for electrical cables and the like, the modular elements of which may be quickly and easily coupled by practically exclusively using snap acting elements, adapted to be snap engaged in suitable guides, without the use of screw means.

Within the scope of the above mentioned task, a main object of the present invention is to provide a modular element system which has a high flexibility, and the elements of which may be easily and quickly coupled both to a wall and in a suspended way, thereby solving with a great facility all of the coupling or assembling problems.

Another object of the present invention is to provide raceways which are so designed as to provide the assembling operator with a great coupling freedom.

Yet another object of the present invention is to provide a modular elements system which is very reliable and has a comparatively reduced cost.

According to one aspect of the present invention, the above mentioned task and objects, as well as yet other objects which will become more apparent thereinafter, are achieved by a modular element system, for making raceways for electrical cables and the like, having the features of the characterizing part of the main claim.

Further characteristics and advantages of the present invention will become more apparent from the following detailed description of a preferred though not exclusive embodiment of a modular element system, for making raceways for electrical cables and the like, according to the present invention, which is illustrated, by way of an indicative but not limitative example, in the accompanying drawings, where:
figure 1 is a cross-sectional view illustrating the channel body having one of a plurality of possible widths;
figure 2 is a cross-sectional view illustrating two different size channel shaped bodies, arranged one adjoining the other;

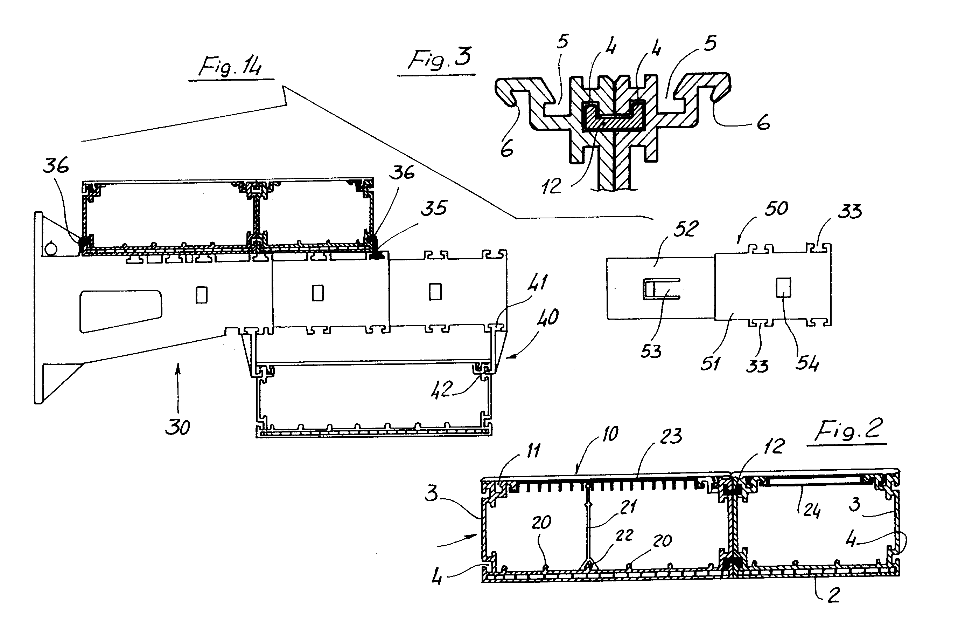

figure 3 is an enlarged scale cross-sectional view illustrating the detail of the joining of two adjoining channel shaped bodies;
figure 4 is a cross sectional view, taken along a middle plane, of a bracket element for supporting the channel body;
figure 5 is a top partially sectioned view of the bracket element;
figure 6 is an end view of the mentioned bracket element;
figure 7 is a longitudinal cross-sectional view of an additional element to be applied to the bracket element;
figure 8 is a schematic view illustrating two coupled additional elements;
figure 9 is an end view of an additional element;
figure 10 is a schematic view illustrating a bracket element for coupling, in a suspended way, two channel element arranged in an adjoining relationship;
figure 11 is a front view illustrating the bracket element of fig.10;
Figure 12 illustrates a bracket element for supporting the channel shaped body in a tilted or reversed position;
Figure 13 is a top view illustrating the bracket element of figure 12;
Figure 14 is a schematic view illustrating a possible coupling of the channel shaped bodies to the bracket element, thereto there are associated or coupled additional elements; and
Figure 15 is a perspective schematic view illustrating a raceway provided with curved elements and branching elements.

With reference to the above mentioned figures, the modular element system for making raceways for electrical cables and the like, comprises a channel shaped body, indicated overally at the reference number 1, which has a U-shaped cross section having a width which depends on the provided application.

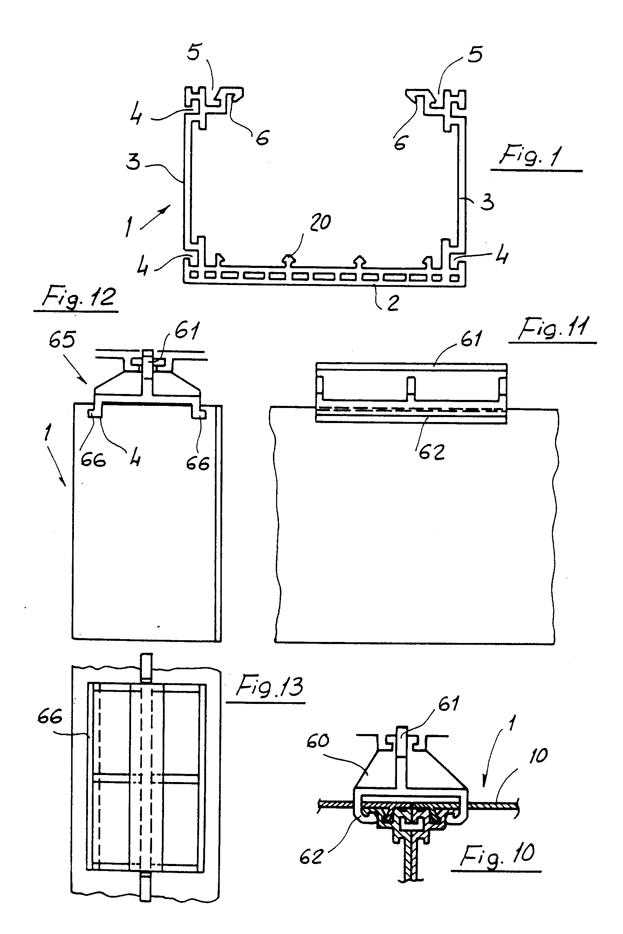

As clearly shown in figure 1, the channel shaped body 1 is provided with a recessed bottom 2 therefrom side opposite walls 3 extend.

At the edges of the side walls 3 there are provided coupling recesses 4 for housing the system modular elements as disclosed in a more detailed way hereinafter.

Moreover the body 1, at the free end of the side walls 3 is provided with a recess 5 adjoining a coupling tooth member 6.

The recess 5, in particular, affords the possibility of snap coupling a cover element 10 provided with coupling elements 11 provided for engaging in the recesses 5 (see figure 2).

The channel shaped bodies 1 are coupled to one another by means of joining section portions, indicated overally at the reference number 12, which have a substantially C-shaped cross section and are provided for engaging in the recesses or cavities 4 of two adjoining channel shaped bodies.

It should be moreover pointed out that coupling recesses having a shape similar to the other coupling recesses 4 are provided at the longitudinal end of the channel shaped bodies 1, for coupling said channel shaped bodies in a continuous way, as clearly shown in figure 15.

Inside the channel shaped body 1 separating septum members 21 are provided, at one end, with a coupling female seat 22, adapted for engagement with and which may be inserted in the projecting edges 20 at the other end into a rack cross member 23 which may be coupled to the coupling tooth members 6 of the channel body 1.

As shown in figure 2, cable stop cross members 24 may be also provided which may be engaged with the coupling tooth members 6 which operate as channel holding and closure members for preventing the electric cables for disengaging during the assembling or installation step.

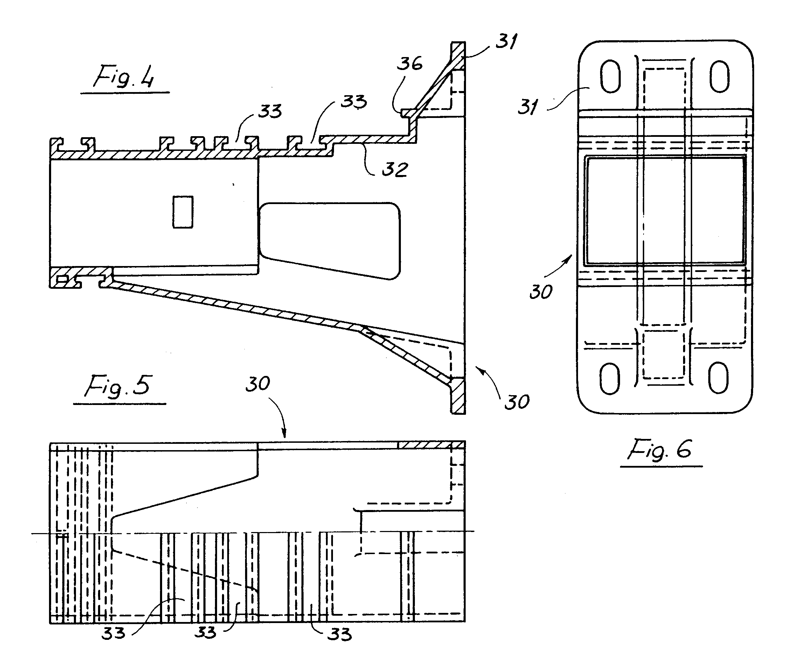

The obtained raceways may be supported either in a resting or suspended way by, a bracket element 30 as clearly shown in figures 4 to 6 which is provided with a base flange 31 for affixing it to a wall therefrom a projecting box-like body 32 extends, which is provided with transversely arranged female guides 33 transversely extending of the box-like shaped body 32.

With the mentioned guides 33 (see figure 14) latching bracket members 35 can be engaged, which guides have their ends 36 adapted for insertion into one of the recesses 4 for rest supporting the channel shaped bodies 1 on the bracket element 30.

The channel shaped bodies 1, as schematically shown in figure 14, transversely extend of the bracket element and may be coupled thereto by means of the supporting bracket 35.

Moreover, the bracket element 30 is provided with a fixed tooth member 36 which engages in corresponding recesses 4 formed on the channel bodies 1.

The channel bodies 1 may be coupled, even in a suspended way, to the bracket element and, to that end, there are provided suspending bracket elements 40, shown in figure 14, which are provided with a bottom portion 41 adapted for insertion into the guides 33, and with a coupling element 42, arranged at their lower end portions, and which may be correspondingly inserted into one of the recesses 4 of the channel shaped body 1.

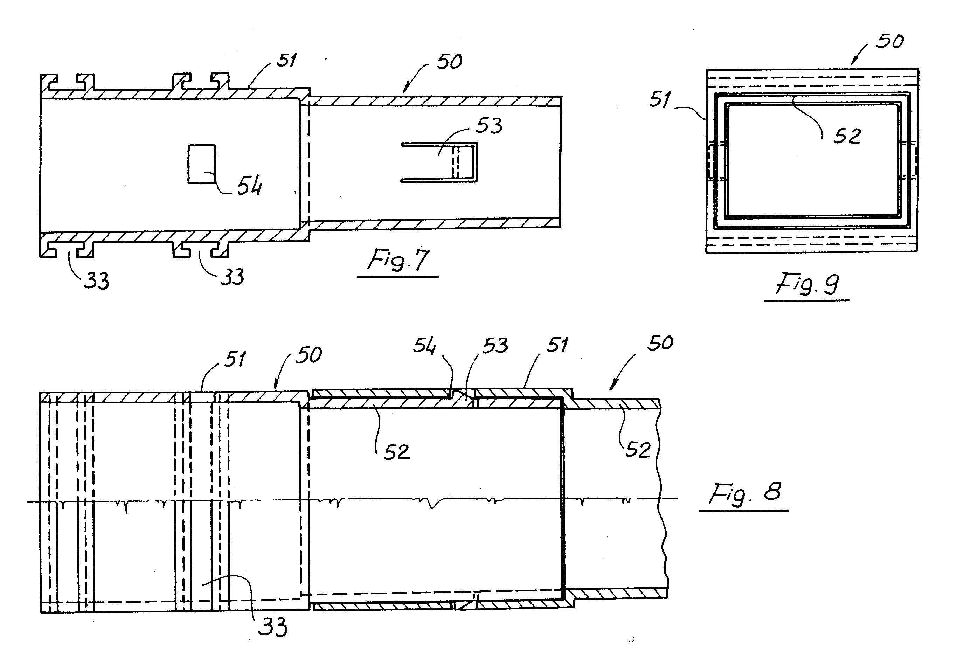

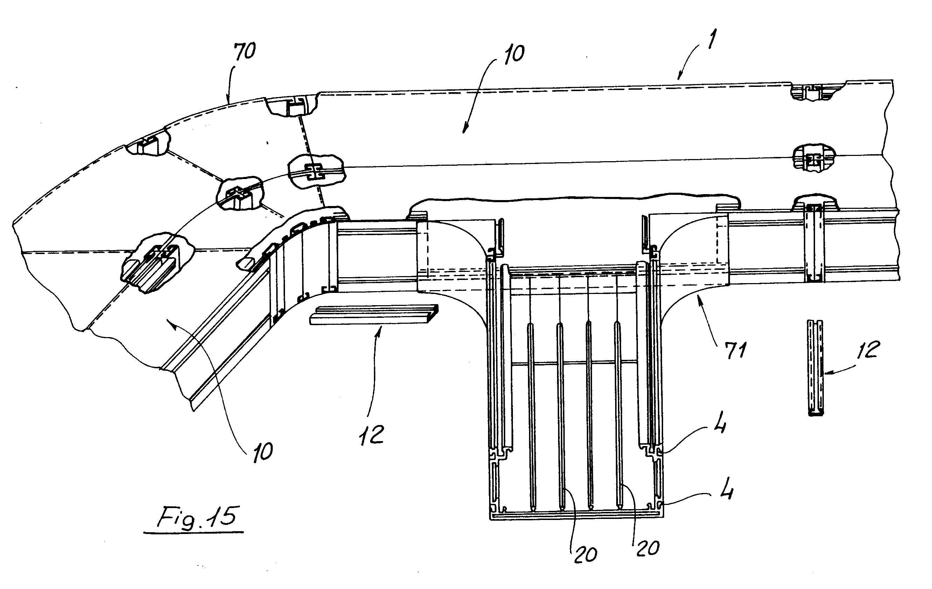

In order to improve the flexibility of the system, there are provided extension additional elements 50, shown in figures 7 to 9, having a tubular shape and consisting of a main body 51 also provided with the guides 33, and a coupling body 52, provided with a snap engaging tooth member 53, to be engaged in a corresponding hole 54 formed through the main body 51, so as to afford the possibility of using a plurality of additional elements, in order to obtain a bracket element having a desired size.

As shown in figures 10 and 11, there is moreover provided a suspension and coupling bracket member, indicated at the reference number 60, which, at the top, is provided with a coupling member 61 which may be inserted into the guides 33 and, at the bottom, with a pair of arms 62, passing through the cover 10 and which may be engaged with the tooth members 6 in order to provide, in addition to the supporting effect, also a stable coupling of two adjoining channel bodies 1.

As shown in figures 12 and 13 there is moreover provided a bracket member 65, for suspension supporting,in a tilted or reversed condition, the channel body 1, which is provided with small foot members 66 adapted for insertion into the recesses 4 of the channel body 1 and, at the top, with a coupling element, analogous to the element 61, for engaging in the recesses 33.

The subject raceway system further comprises, as shown in figure 15, curved portions indicated at the reference number 70, as well as T-shaped branches, indicated at the reference number 71, which afford the possibility of improving the coupling range of the system modular elements for making any desired type of raceway.

From the above disclosure it should be apparent that the present invention fully achieves the intended task and objects.

In particular, the fact is to be pointed out that all of the couplings may be obtained in a very simple and quick way, by using coupling elements which may be easily engaged in recesses previously formed in the section members.

Moreover, owing to the specifically designed structure of the bracket element and additional elements applied thereto, it will be possible to construct either either a supporting arrangement of the channel bodies on the bracket element or a suspension arrangement of said channel bodies, with the possibility of using a single bracket element for supporting a plurality of raceways, either in a resting or in a suspending way.

Furthermore, the possibility of coupling to one another both the channel shaped bodies and the additional elements of the bracket elements, provide the system with a great flexibility, since the system can be made with any desired shapes.

## Claims

1. A modular element system, for making raceways for electrical cables and the like, comprising a channel shaped body (1) having a U-shaped cross section and adapted to be closed by a cover member (10), on at least two faces of said channel body there being provided coupling recesses (4) for removably housing joining section members (12), to join a plurality of adjoining channel bodies (1), and bracket members (30,35,40,60,65) for supporting said channel body (1), characterized in that said channel body (1) is provided, with a recessed bottom (2) therefrom side walls (3) extend provided near each of their edges with coupling recesses (4) longitudinally extending on said channel body (1).

2. A modular element system, according to Claim 1, characterized in that said channel body (1) is provided, at the free ends of the side walls (3), with coupling seats (5) for removably coupling said cover member (10).

3. A modular element system, according to claims 1 and 2, characterized in that said coupling seats (5) are arranged near coupling tooth members (6) also formed at said free ends of said side walls (3).

4. A modular element system, according to one or more of the preceding claims, characterized in that said system further comprises, on said bottom of said channel body (1), projecting edges (20)engageable with separating septum elements (21) provided with coupling seats (22) to be engaged at with rack cross elements (23) supported by said coupling tooth members (6).

5. A modular element system, according to one or more of the preceding claims, characterized in that said system further comprises electrical cable stop elements (24) engaging in said coupling tooth members (6).

6. A modular element system, according to one or more of the preceding claims, characterized in that said joining section members (11) comprise section portions having a C-shaped cross section engageable in said recesses (4) of two adjoining channel bodies (1).

7. A modular element system, according to one or more of the preceding claims, characterized in that said bracket members (30) are provided with a bottom flange (31), to be affixed to a wall, therefrom a box-like body (32) extends which is provided with guides (33) transversally arranged of said box-like body (32).

8. A modular element system, according to Claims 1 and 7, characterized in that it comprises further coupling brackets (35) for engaging in said guides (33) each said coupling bracket (35) including a fixed tooth engaging in a respective said recess (4).

9. A modular element system, according to one or more of the preceding claims, characterized in that said system further comprises first suspension bracket members (40) for supporting the channel bodies (1), provided with a bottom (41) to be inserted into said guides (33) and a coupling tooth member (42) to be engaged in said recesses (4).

10. A modular element system, according to one or more of the preceding claims, characterized in that said system further comprises second suspension bracket members (60) for supporting two adjoining channel bodies (1), said suspension bracket members (60) having a coupling member (61) engageable in said guides (33), and opposite arms (62) extending inside said cover element (10) and engageable with said tooth members (6).

11. A modular element system, according to one or more of the preceding claims, characterized in that said system further comprises third bracket members (65) for supporting, in a tilted condition, the channel body (1), provided, at the top, with a coupling member to be inserted into said guides (33) and opposite foot members (66) to be inserted into said recesses (4).

12. A modular element system, according to one or more of the preceding claims, characterized in that said system further comprises curved portions (70) engageable with said channel bodies (1) as well as T-shaped branch elements (71) to be applied to the side walls (3) of the channel bodies (1) for allowing a coupling in a perpendicular direction to said channel bodies.

## Patentansprüche

1. Baukastensystem zur Herstellung von Leitungen zur Aufnahme von elektrischen Kabeln und dergleichen, mit einem kanalförmigen Körper (1), der einen U-förmige Durchschnitt weist auf und mittels eines Deckelelementes (10) geschlossen zu sein geeignet ist, wobei wenigstens zwei Steiten des obengenannten kanalförmigen Körpers zum abnehmbaren Aufnehmen von anliegenden Profilen (12) mit Verbindungsaufnahmen (4), um so mehreren vereinigten kanalförmigen Körper (1) zu verbinden, und mit Bügelelementen (30, 35, 40, 60, 65) zum Stützen des obengenannten kanalförmigen Körpers (1) versehen sind,
dadurch gekennzeichnet, dass der obengenannte kanalförmige Körper (1) mit einem aufegnommenen Boden (2) versehen ist, aus dem den Seitenwände (3) erstrecken sich und, nebed jedee einen ihrer Kanten mit auf den obengenannte kanalförmige Körper (1) longitudinal sich erstreckender Verbindungsaufnahmen (4) versehen sind.

2. Baukastensystem nach Anspruch 1, dadurch gekennzeichnet, dass der obengenannte kanalförmige Körper (1), auf seinen freien Ende der obengenannten Seitenwände (3), zum abnehmbaren Verbinden des obengenannten Deckelelementes (10) mit Verbindungssitzen (5) versehen ist.

3. Baukastensystem nach Anspruch 1 und Anspruch 2, dadurch gekennzeichnet, dass die obengenannten Verbindungssitze (5) neben Verbindungszahnelementen (6) angeordnet sind, die auch an den obengenannten freien Enden der obengenannten Seitenwände (3) gebildet sind.

4. Baukastensystem nach einem oder mehreren vorhergehenden Ansprüchen, dadurch gekennzeichnet, dass dies System, ausserdem, auf den obengenannte Boden des obengenannten kanalförmigen Körpers (1) mit auskragenden Kanten (20) versehen ist, die mit Trennelementen (21) eingreifen können, die, ihrerseits, mit Verbindungssitzen (22) versehen sind, um so mit auf den obengenannten Verbindungszahnelementen (6) gestützten gezahnten Querelementen (23) einzugreifen.

5. Baukastensystem nach einem oder mehreren vorhergehenden Ansprüchen, dadurch gekennzeichnet, dass dies System, ausserdem, mit den elektrische Kabel haltender Elementen (24) versehen ist, die in der obengenannten Verbindungszahnelementen (6) eingreifen.

6. Baukastensystem nach einem oder mehreren vorhergehenden Ansprüchen, dadurch gekennzeichnet, dass die obengenannten vereinigten Profilen (11) mit einen C-förmige Durchschnitt aufweisender Profilen versehen sind, die in der obengenannten Aufnahmen (4) der zweien anliegenden kanalförmigen Körper (1) eingreifen können.

7. Baukastensystem nach einem oder mehreren vorhergehenden Ansprüchen, dadurch gekennzeichnet, dass die obengenannten Bügelelemente (30), um so an einer Wand befestigt zu sein, mit einem Grundflansch (31) versehen sind, aus dem einen Kastenkörper (32) erstreckt sich, der, mit zum obengenannten Kastenkörper (32) querangeordneten Führungen (33) versehen ist.

8. Baukastensystem nach Anspruch 1 und Anspruch 7, dadurch gekennzeichnet, dass es, ausserdem, mit Verbindungsbügeln (35) versehen ist, somit es in der obengenannten Führungen (33) eingreifen kann, wobei jeder Verbindungsbügel (35) mit einem in einer entsprechenden obengenannten Aufnahme (4) eingreifenden Festzahn versehen ist.

9. Baukastensystem nach einem oder mehreren vorhergehenden Ansprüchen, dadurch gekennzeichnet, dass deis System, ausserdem, mit den kanalförmigen Körper (1) auflagernder erster Aufhängungsbügelelementen (40) versehen ist, die mit einem in der obengenannten Führungen (33) einzugreifenden Boden (41) und einem in der obengenannten Aufnahmen (4) einzugreifenden Verbindungszahnelementen (42) versehen ist.

10. Baukastensystem nach einem oder mehreren vorhergehenden Ansprüchen, dadurch gekennzeichnet, dass dies System, ausserdem, mit zweiten den zweien anliegenden kanalförmigen Körper (1) auflagernder Aufhängungsbügelelementen (60) versehen ist, wobei die obengenannten Aufhängungsbügelelementen (60) mit einem in der obengenannten Führungen (33) eingreifbaren Verbindungselement (61) und mit entgegengesetzter, innerhalb des obengenannten Deckelelementes (10) sich erstreckender un mit der obengenannten Zahnelementen (6) eingreifender Armen (62) weist auf.

11. Baukastensystem nach einem oder mehreren vorhergehenden Ansprüchen, dadurch gekennzeichnet, dass dies System, ausserdem, mit dritter Bügelelementen (65) versehen ist, die zum Stützen auf eine geneigte Stellung den kanalförmige Körper (1) dienen, der, auf seine obere Seite, mit einem in der obengenannten Führungen (33) einzufügenden Verbindungselement und mit entgegengesetzter in der obengenannten Aufnahmen (4) einzufügender Fusselementen (66) versehen ist.

12. Baukastensystem nach einem oder mehreren vorhergehenden Ansprüchen, dadurch gekennzeichnet, dass dies System, ausserdem, mit in der obengenannten kanalförmigen Körpern (1) eingreifbarer gekrümmter Portionen (70) wie auch mit in der Seitenwänden (3) der kanalförmigen Körpern (1) zu verbindender T-förmiger Zweigelementen (71) versehen ist, somit eine Verbindung der kanalförmigen Körpern in einer senkrechten Richtung ermöglicht wird.

## Revendications

1. Système à éléments modulaires, pour construire des canalisations pour contenir des câbles électriques et similaires, comprenant un corps (1) gabarié en forme d'un canal et présentant une seciton transversale en forme de U et adapté à être fermé par un élément en forme de couvercle (10), sur deux faces au moins dudit corps en forme de canal il y étant prévu des évidements d'accouplement (4) pour y loger des éléments profilés (12) de jonction, en vue de joindre une pluralité de corps de canalisation (1) adjacents, et des éléments en forme de bride pour supporter ledit corps de canalisation (1),
caractérisé en ce que ledit corps (1) de canalisation est muni d'un fond évidé (2) duquel des parois latérales (3) s'étendent et sont munies, près de chacun de leur coins, d'évidements (4) d'accouplement, s'étendant longitudinalement sur ledit corps (1) en forme de canal.

2. Système à éléments modulaires, selon la revendication 1, caractérisé en ce que ledit corps (1) en forme de canal est muni, sur les extrémités libres des parois latérales (3), de sièges (5) d'accouplement pour accoupler d'une manière amovible ledit élément (10) en forme de couvercle.

3. Système à éléments modulaires, selon les revendications 1 et 2, caractérisé en ce que lesdits sièges d'accouplement (5) sont arrangés près d'éléments dentés (6) d'accouplement, eux-aussi formés sur les extrémités libres desdites parois latérales (3).

4. Système à éléments modulaires, selon l'une ou plusieurs des revendications précédentes, caractérisé en ce que lesit système comprend en outre, sur ledit fond dudit corps (1) de canalisation, des bords saillants (20) pouvant être engagés avec des éléments cloison (21) de séparation qui sont munis de sièges (22) d'accouplement en vue d'être engagés avec des éléments transversaux (23) en forme de râtelier, qui sont supportés par lesdits éléments dentés (6) d'accouplement.

5. Système à éléments modulaires, selon l'une ou plusieurs des revendications précédentes, caractérisé en ce que ledit système comprend en outre des éléments (24) d'arrêt du câble électrique, s'engageant dans lesdits éléments dentés (6) d'accouplement.

6. Système à éléments modulaires, selon l'une ou plusieurs des revendications précédentes caractérisé en ce que lesdits éléments profilés (11) de jonction comprennent des portions profilées présentant une coupe transversale en forme de C pouvant être engagées dans lesdits évidements (4) de deux corps (1) adjacents de canalisation.

7. Système à éléments modulaires, selon l'une ou plusieurs des revendications précédentes, caractérisé en ce que lesdits éléments (30) en forme de bride sont munis d'une flasque de fond (31), en vue d'être fixés sur une paroi, de laquelle un corps (32) en forme de boîte s'étend et qui est pourvu de guides (33) arrangées transversalement par rapport audit corps (32) en forme de boîte.

8. Système à éléments modulaire, selon les revendications 1 et 7, caractérisé en ce qu'il comprend en outre des brides (35) d'accouplement pour engager dans lesdites guides (33), chacune desdites brides (35) d'accouplement comprenant un dent fixe s'engageant dans l'un desdits évidements (4) respectifs.

9. Système à éléments modulaires, selon l'une ou plusieurs des revendications précédentes caractérisé en ce que ledit sysème comprend en outre des premiers éléments (40) en forme de bride de suspension pour supporter les corps (1) en forme de canal, lesdits éléments en forme de bride étant munis d'un fond (41) à être inséré dans lesdites guides (33) et d'un élément denté (42) d'accouplement en vue d'être engagé dans lesdits évidements (4).

10. Système à éléments modulaires, selon l'une ou plusieurs des revendications précédentes, caractérisé en ce que ledit système comprend en outre des deuxièmes éléments (60) en forme de bride de suspension en vue de supporter deux corps (1) adjacents en forme de canal, lesdits éléments (60) en forme de bride de suspension présentant un élément d'accouplement (61) pouvant être engagé dans lesdites guides (33), et des bras (62) opposés s'étendant à l'intérieur dudit élément (10) en forme de couvercle et pouvant être engagé par lesdits éléments (6) en forme de dent.

11. Système à éléments modulaires, selon l'une ou plusieurs des revendications précédentes, caractérisé en ce que ledit système comprenden outre troisièmes éléments (65) en forme de bride pour supporter, dans une condition inclinée, le corps (1) en forme de canal qui est muni, sur sa région supérieure, d'un élément d'accouplement pouvant être inséré dans lesdites guides (33) et d'éléments (66) opposés en forme de pied pouvant être insérés dans lesdits évidements (4).

12. Système à éléments modulaires, selon l'une ou plusieurs des revendications précédentes caractérisé en ce que ledit système comprend en outre des portions courbées (70) qui peuvent être engagées par lesdits corps (1) en forme de canal, aussi que des éléments ramifiés (71) en forme de T qui peuvent être appliqués aux parois latérales (3) des corps en forme de canal (1) en vue de permettre un accouplement dans un sens perpendiculaire auxdits corps en forme de canal.
